# EUROPÄISCHE PATENTSCHRIFT

(11) **EP 3 225 043 B1**
(45) Veröffentlichungstag und Bekanntmachung des Hinweises auf die Patenterteilung: **06.03.2019**
(21) Anmeldenummer: 15766460.8
(22) Anmeldetag: 17.09.2015
(51) Int. Cl.: H04W 12/08, H04L 29/06, H04W 4/40, H04L 29/08

(54) **VERFAHREN UND VORRICHTUNG ZUR KONTROLLE ZUMINDEST EINES DATENABRUFS VON EINEM STEUERGERÄT EINES FAHRZEUGS SOWIE VERFAHREN UND VORRICHTUNG ZUM ABRUFEN VON DATEN VON EINEM STEUERGERÄT EINES FAHRZEUGS**
METHOD AND DEVICE FOR CONTROLLING AT LEAST ONE DATA RETRIEVAL FROM A CONTROL UNIT OF A VEHICLE, AND METHOD AND DEVICE FOR RETRIEVING DATA FROM A CONTROL UNIT OF A VEHICLE
PROCÉDÉ ET DISPOSITIF DE CONTRÔLE D'AU MOINS UN APPEL DE DONNÉES PAR UN APPAREIL DE COMMANDE D'UN VÉHICULE AINSI QUE PROCÉDÉ ET DISPOSITIF D'APPEL DE DONNÉES PAR UN APPAREIL DE COMMANDE D'UN VÉHICULE

(30) Priorität: 27.11.2014 DE 102014224208
(43) Veröffentlichungstag der Anmeldung: 04.10.2017
(73) Patentinhaber: Robert Bosch GmbH, 70442 Stuttgart (DE)
(72) Erfinder: BLASCHKE, Volker, 71642 Ludwigsburg (DE); DOERING, Michael, Ernst, 71701 Schwieberdingen (DE); POEHNL, Michael, 75449 Wurmberg (DE); ABENDROTH, Stefan, 70563 Stuttgart (DE); LOTHSPEICH, Timo, 71287 Weissach (DE)
(86) Internationale Anmeldenummer: PCT/EP2015/071338
(87) Internationale Veröffentlichungsnummer: WO 2016/082959

(56) Entgegenhaltungen:
- WO-A2-2014/159117
- DE-A1-102012 209 559
- US-A1- 2013 250 933
- US-A1- 2014 165 159

## Beschreibung

### Stand der Technik

Die vorliegende Erfindung bezieht sich auf ein Verfahren zur Kontrolle zumindest eines Datenabrufs von einem Steuergerät eines Fahrzeugs, ein Verfahren zum Abrufen von Daten von einem Steuergerät eines Fahrzeugs, auf zumindest eine entsprechende Vorrichtung sowie auf ein entsprechendes Computerprogramm.

Steuergeräte in Fahrzeugen stellen eine Vielzahl von Daten bereit, die auch für andere Steuergeräte interessant sind. Dies trifft zu für Steuergeräte im gleichen Fahrzeug, für Steuergeräte in einem benachbarten Fahrzeug über eine Car-2-Car-Kommunikation oder auf Verkehrsinfrastruktur wie z. B. Lichtzeichenanlagen und Verkehrsleitzentralen oder einen Diensteanbieter beispielsweise zum Flottenmanagement über Car-2-Infrastructure-Kommunikation. Allgemeiner wird dies mit Car-to-X-Technologie bezeichnet.

Zukünftig werden Daten aus Steuergeräten in Kraftfahrzeugen zur Nutzung in Cloud-Diensten und Mehrwertdiensten (Flottenmanagement, proaktive Wartung, Felddatenbeobachtung, etc.) abgerufen werden. Daher muss aus technischen Gründen die Anzahl der Datenabrufe beschränkt werden, um eine Ressourcenüberlastung durch zu viele Anfragen zu vermeiden. Außerdem besteht ein wirtschaftliches Interesse die Nutzung der Daten (beispielsweise durch Drittanbieter) mit einem Bezahlmodell zu hinterlegen (Daten als "Kapital"). Aus der WO 2014/159117 A2 ist ein elektronisches Steuergerät bekannt, welches eingerichtet ist, Nutzer-spezifische Beschränkungen für eine Fahrzeugnutzung zu empfangen und durchzusetzen.

### Offenbarung der Erfindung

Vor diesem Hintergrund werden mit dem hier vorgestellten Ansatz ein Verfahren zur Kontrolle zumindest eines Datenabrufs von einem Steuergerät eines Fahrzeugs, weiterhin ein Verfahren zum Abrufen von Daten von einem Steuergerät eines Fahrzeugs weiterhin ein Steuergerät, das zumindest eines dieser Verfahren verwendet sowie schließlich ein entsprechendes Computerprogramm gemäß den Hauptansprüchen vorgestellt. Vorteilhafte Ausgestaltungen ergeben sich aus den jeweiligen Unteransprüchen und der nachfolgenden Beschreibung.

Der Zugriff auf Daten in einem Fahrzeug kann durch Schutzmechanismen eingeschränkt und gesteuert werden. So kann eine Datenabfrage über Abfragecodes validiert werden. Dabei können die Abfragecodes in entsprechendem Umfang bereitgestellt werden. Daten können unter Bedingungen bereitgestellt werden, sodass beispielsweise entsprechende Daten nur auf eine Datenabfrage, die einen passenden und gültigen Abfragecode liefert, bereitgestellt werden.

Es wird ein Verfahren zur Kontrolle zumindest eines Datenabrufs von einem Steuergerät eines Fahrzeugs vorgestellt, wobei das Verfahren die folgenden Schritte aufweist:
Einlesen einer Anfrage zum Bereitstellen von Daten sowie eines der Anfrage zugeordneten Abfragecodes;

Überprüfen einer Gültigkeit des Abfragecodes; und

Bereitstellen einer die Anfrage beantwortenden Antwortinformation, wobei die Antwortinformation zumindest einen physikalischen Parameter des Fahrzeugs und/oder des Fahrers und/oder einen Fahrtparameter des Fahrzeugs umfasst.

Ein Fahrzeug weist zumindest ein Steuergerät mit einer Kommunikationsschnittstelle auf. Unter einem Steuergerät kann eine ECU verstanden werden. Dabei kann ECU für den englischsprachigen Begriff "Electronic Control Unit" stehen. Ein weiteres Steuergerät in demselben Fahrzeug, in einem weiteren Fahrzeug oder eine Verkehrsinfrastruktur kann über die Kommunikationsschnittstelle Daten von dem Steuergerät abfragen. Zum Abfragen von Daten von dem Steuergerät kann eine Anfrage gestellt werden. Dabei kann es sich bei der Anfrage um eine Nachricht oder ein Signal handeln, welches eine Datenabfrage repräsentiert. Unter einem Abfragecode kann eine Abfragekennung, eine Transaktionsnummer, ein Einmalpasswort oder ein Merkmal verstanden werden. Dabei kann der Abfragecode ein analoges oder vorzugsweise ein digitales Signal repräsentieren. Die Anfrage und der Abfragecode können empfangen oder eingelesen werden. So kann unter dem Einlesen auch ein Empfangen verstanden werden. Die Antwortinformation kann die Daten repräsentieren, die bei der Anfrage abgefragt wurden. Dabei kann die Antwortinformation ein digitales Signal oder eine Nachricht repräsentieren. Die Antwortinformation kann Daten oder Informationen umfassen, die in dem Steuergerät gespeichert sind. Unter einem physikalischen Parameter des Fahrzeugs kann beispielsweise eine Geschwindigkeit, eine Motordrehzahl, eine Motortemperatur, ein Lenkradwinkeleinschlag, ein Neigungswinkel, ein Füllstand oder dergleichen verstanden werden. Dabei kann der physikalische Parameter von einem Sensor erfasst oder von einem Steuergerät bereitgestellt werden. Unter einem Parameter des Fahrers kann beispielsweise ein eine Müdigkeit des Fahrers repräsentierender Wert, eine Blickrichtung des Fahrers oder eine Sitzposition des Fahrers verstanden werden. Unter einem Fahrtparameter des Fahrzeugs kann beispielsweise eine Trajektorie oder eine Fahrtrichtung des Fahrzeugs verstanden werden.

Zwischen dem Schritt des Überprüfens und dem Schritt des Bereitstellens kann ein Schritt des Überwachens ausgeführt werden. Im Schritt des Überwachens kann ein vorabdefiniertes Zeitintervall zwischen der Anfrage und einer zuvor ausgeführten Anfrage überwacht und/oder abgewartet werden. So kann der Schritt des Überwachens ein Ausführen des Verfahrens anhalten, bis das vorabdefinierte Zeitintervall abgelaufen ist. Alternativ kann der Schritt des Überwachens einen Fehler oder ein Fehlersignal ausgeben, wenn die Zeit seit der vorangegangenen Abfrage kleiner dem vorab definierten Zeitintervall ist. Vorteilhaft kann eine absichtliche oder unabsichtliche Überlastung des Steuergeräts oder eines Netzwerks, mit dem das Steuergerät verbunden ist, vermieden werden. So kann eine definierte Dienstgüte erzielt werden.

Ferner kann im Schritt des Überprüfens überprüft werden, ob eine Abfragecodeliste den Abfragecode umfasst. Die Abfragecodeliste kann in dem Steuergerät hinterlegt sein. Im Schritt des Bereitstellens kann der Abfragecode insbesondere aus der Abfragecodeliste entfernt werden. Eine Abfragecodeliste kann eine Vielzahl von Abfragecodes umfassen. Dabei können im Steuergerät eine Mehrzahl von Abfragecodelisten hinterlegt sein. So kann im Schritt des Überprüfens überprüft werden, ob eine der Mehrzahl von in dem Steuergerät hinterlegten Abfragecodelisten den Abfragecode umfasst.

Alternativ kann im Schritt des Überprüfens eine Gültigkeit des Abfragecodes unter Verwendung eines in dem Steuergerät hinterlegten Algorithmus online bestimmt werden. In einer alternativen Ausführungsform kann ein Abfragecode mehrfach verwendet werden. Dabei wird in einer Variante darauf verzichtet, im Schritt des Bereitstellens den Abfragecode aus der Abfragecodeliste zu entfernen. In einer weiteren Variante wird im Schritt des Bereitstellens eine dem Abfragecode zuordenbare Anzahl von Abfrageberechtigungen dekrementiert.

Günstig ist es auch, wenn in einer Ausführungsform im Schritt des Überprüfens der Abfragecode in der Abfragecodeliste gesperrt wird. So kann sichergestellt werden, dass der Abfragecode kein zweites Mal verwendet werden kann, in der Zeitspanne, in der die Abfrage noch nicht abgeschlossen ist und somit der Abfragecode noch nicht in der Abfragecodeliste gelöscht ist.

Nach dem Schritt des Überprüfens kann ein Schritt des Ablehnens ausgeführt werden, wenn die Abfragecodeliste den Abfragecode nicht umfasst oder der Abfragecode in der Abfragecodeliste als gesperrt vermerkt ist. Dabei kann im Schritt des Ablehnens ein negatives Bestätigungssignal bereitgestellt werden. Ein weiterer Schritt des Ablehnens oder alternativ der gleiche Schritt des Ablehnens kann ausgeführt werden, wenn der Schritt des Überwachens ausgeführt wird und das vorabdefinierte Zeitintervall zwischen zwei Anfragen noch nicht abgelaufen ist beziehungsweise nicht eingehalten wird.

Es wird ein Verfahren zum Abrufen von Daten von einem Steuergerät eines Fahrzeugs vorgestellt, wobei das Verfahren die folgenden Schritte aufweist: Bereitstellen einer Anfrage zum Empfangen von Daten sowie eines der Anfrage zugeordneten Abfragecodes; und

Empfangen oder Einlesen einer die Anfrage beantwortenden Antwortinformation, wobei die Antwortinformation zumindest einen physikalischen Parameter des Fahrzeugs und/oder des Fahrers und/oder einen Fahrtparameter des Fahrzeugs umfasst.

Bei der Anfrage kann es sich um die im Verfahren zur Kontrolle von Datenabrufen von einem Steuergerät eines Fahrzeugs empfangene Anfrage handeln. Weiterhin kann es sich bei der Antwortinformation um die von dem Verfahren zur Kontrolle von Datenabrufen von dem Steuergerät bereitgestellte Antwortinformation handeln.

Im Schritt des Bereitstellens kann der Abfragecode aus einer Mehrzahl von in einer Abfragecodeliste hinterlegten Abfragecodes ausgewählt werden. Ergänzend oder alternativ kann im Schritt des Empfangens der Abfragecode aus der Abfragecodeliste entfernt werden. Bei der Abfragecodeliste kann es sich um die im Verfahren zur Kontrolle von Datenabrufen von einem Steuergerät verwendete Abfragecodeliste, eine Kopie der genannten Abfragecodeliste oder um eine von einem gesonderten Verfahren zum Herstellen einer Abfragecodeliste bereitgestellte Abfragecodeliste handeln.

Der hier vorgestellte Ansatz schafft ferner zumindest eine Vorrichtung, die ausgebildet ist, um die Schritte einer Variante eines der hier vorgestellten Verfahren in entsprechenden Einrichtungen durchzuführen, anzusteuern beziehungsweise umzusetzen. Die Vorrichtung kann Teil eines Steuergeräts des Fahrzeugs sein. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann zumindest eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 eine schematische Darstellung zweier Fahrzeuge mit zumindest je einer Vorrichtung gemäß einem Ausführungsbeispiel der vorliegenden Erfindung;
Fig. 2 ein Ablaufdiagramm eines Verfahrens gemäß einem Ausführungsbeispiel der vorliegenden Erfindung;
Fig. 3 ein Ablaufdiagramm eines Verfahrens gemäß einem Ausführungsbeispiel der vorliegenden Erfindung;
Fig. 4 ein kombiniertes Ablaufdiagramm der Verfahren gemäß einem Ausführungsbeispiel der vorliegenden Erfindung; und
Fig. 5 ein Ablaufdiagramm eines Verfahrens gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

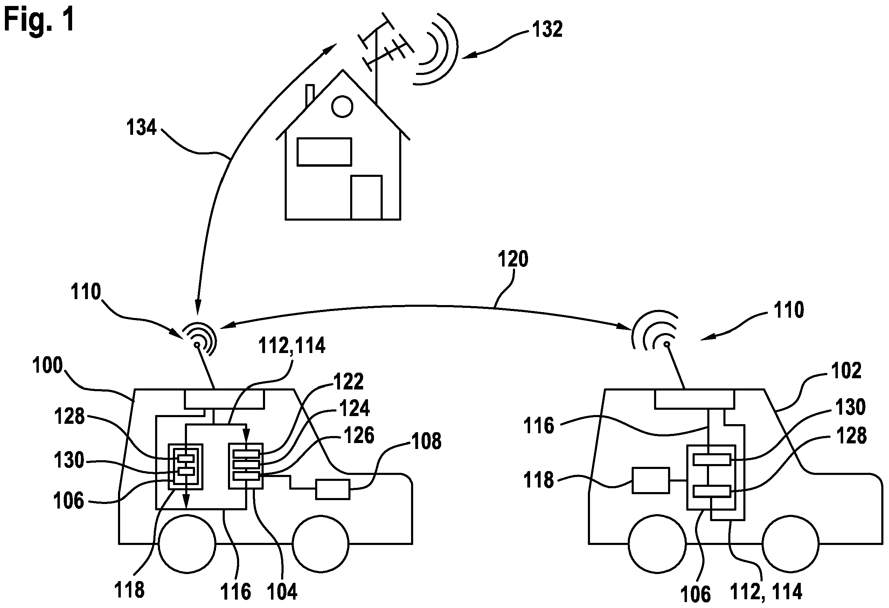

Fig. 1 zeigt eine schematische Darstellung zweier Fahrzeuge 100, 102 mit zumindest je einer Vorrichtung 104, 106 gemäß einem Ausführungsbeispiel der vorliegenden Erfindung. Ein Fahrzeug 100 weist zumindest ein Steuergerät 108, eine Vorrichtung 104 zur Kontrolle von Datenabrufen von dem Steuergerät 108 des Fahrzeugs 100, eine Vorrichtung 106 zum Abrufen von Daten von dem Steuergerät 108 des Fahrzeugs 100 sowie eine Kommunikationseinrichtung 110 auf. Die Vorrichtung 104 ist ausgebildet, ansprechend auf eine Anfrage 112 nach Kontrolle eines Abfragecodes 114 eine die Anfrage 112 beantwortende Antwortinformation 116 bereitzustellen. Die Vorrichtung 106 ist ausgebildet, die Anfrage 112 bereitzustellen und die die Anfrage 112 beantwortende Antwortinformation 116 zu empfangen.

In Fig. 1 sind drei Szenarien dargestellt, die im Folgenden näher ausgeführt sind. In einer ersten Variante weist das Fahrzeug 100 zwei Steuergeräte 108, 118 auf, die Daten untereinander austauschen. In einer Variante sind die vorgestellten Vorrichtungen 104, 106 Bestandteil jeweils eines Steuergerätes 108, 118 oder alternativ ist jeweils ein Steuergerät 108, 118 mit einer der Vorrichtungen 104, 106 verbunden. In dem dargestellten Ausführungsbeispiel ist die Vorrichtung 104 zur Kontrolle von Datenabrufen von dem Steuergerät 108 mit diesem über eine Steuerleitung verbunden. Das Steuergerät 118 umfasst die Vorrichtung 106. Zwischen den beiden Steuergeräten 108, 118 ist eine gesicherte in-Vehicle-Kommunikation möglich.

In einer zweiten Variante werden Daten zwischen zwei Fahrzeugen 100, 102 ausgetauscht. Die beiden Fahrzeuge 100, 102 weisen eine Kommunikationseinrichtung 110 auf. Die Kommunikationseinrichtung 110 des Fahrzeugs 100 ist mit der Vorrichtung 104 zur Kontrolle von Datenabrufen von dem Steuergerät 108 des Fahrzeugs 100 verbunden. Bei der genannten Verbindung handelt es sich um eine bidirektionale Verbindung. In dem weiteren Fahrzeug 102 ist die Vorrichtung 106 zum Abrufen von Daten von dem Steuergerät 108 des Fahrzeugs 100 mit der Kommunikationseinrichtung 110 des weiteren Fahrzeugs 102 bidirektional verbunden. Zwischen den beiden Kommunikationseinrichtungen 110 der beiden Fahrzeuge 100, 102 findet eine Car-2-Car-Kommunikation 120 statt. Um das Steuergerät 118 des weiteren Fahrzeugs 102 mit Daten des Fahrzeugs 100 zu versorgen, ist die Vorrichtung 106 des weiteren Fahrzeugs 102 ausgebildet, eine Anfrage 112 zum Empfangen von Daten sowie einen der Anfrage 112 zugeordneten Abfragecode 114 bereitzustellen. Die Anfrage 112 und der zugeordnete Abfragecode 114 werden über die Kommunikationseinrichtung 110 des weiteren Fahrzeugs 102 an die Kommunikationseinrichtung 110 des Fahrzeugs 100 gesendet und von dort an einer Schnittstelle der Vorrichtung 104 des Fahrzeugs 100 bereitgestellt. Die Vorrichtung 104 des Fahrzeugs 100 ist wie bereits beschrieben ausgebildet, in einer Schnittstelle 122 zum Empfangen die Anfrage 112 und den zugeordneten Abfragecode 114 zu empfangen, darauf in einer Einrichtung 124 zum Überprüfen die Gültigkeit des Abfragecodes 114 zu überprüfen sowie in einer Einrichtung 126 zum Bereitstellen die die Anfrage 112 beantwortende Antwortinformation 116 bereitzustellen. Die Antwortinformation 116 wird über die Kommunikationseinrichtung 110 des Fahrzeugs 100 an die Kommunikationseinrichtung 110 des weiteren Fahrzeugs 102 mittels Car-2-Car-Kommunikation 120 übertragen. Die Vorrichtung 106 des weiteren Fahrzeugs 102 weist eine Einrichtung 128 zum Bereitstellen der Anfrage 112 zum Empfangen von Daten sowie eines der Anfrage 112 zugeordneten Abfragecodes auf. Weiterhin umfasst die Vorrichtung 106 des weiteren Fahrzeugs 102 eine Einrichtung 130 zum Empfangen der die Anfrage 112 beantwortenden Antwortinformation 116.

In einer dritten Variante werden Daten zwischen dem Fahrzeug 100 und einer Verkehrsinfrastruktur 132 ausgetauscht. Zwischen dem Fahrzeug 100 und der Verkehrsinfrastruktur 132 wird eine sogenannte Car-2-Infrastructure-Kommunikation 134 beziehungsweise eine Kommunikation 132 mit Car-to-X-Technologie etabliert. Der Ablauf über Anfrage 112, Abfragecode 114 sowie der die Anfrage 112 beantwortenden Antwortinformation 116 entspricht letztendlich weitgehend den beiden bereits beschriebenen Varianten.

In einem Ausführungsbeispiel weist die Kommunikationseinrichtung 110 zumindest eine Mobilfunkschnittstelle auf. Alternativ oder ergänzend erfolgt eine Kommunikation innerhalb eines Fahrzeugs 100, 102 beispielsweise über ein Bussystem wie LIN-Bus, CAN-Bus, Flexray, MOST oder einem echtzeitfähigen Ethernet. Dabei erfolgt die Kommunikation innerhalb des Fahrzeugs bevorzugt kabelgebunden, zwischen Fahrzeugen 100, 102 oder einem Fahrzeug 100 und einer Infrastruktur 130 in der Regel kabellos.

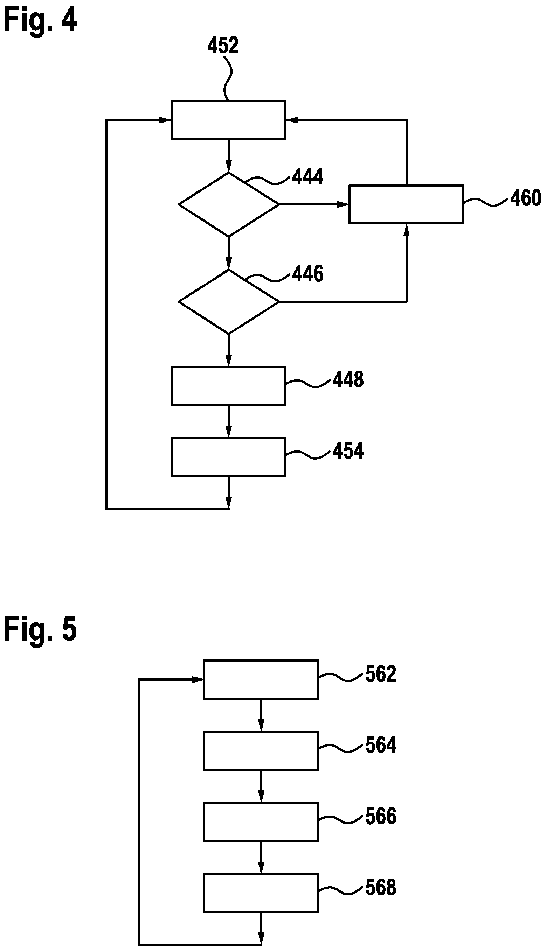

Optional wird eine Abrechnungs- beziehungsweise Bezahlfunktion für Datenabrufe aus Steuergeräten beziehungsweise ECUs implementiert. Dabei werden die Abrufcodes 114 gegen ein Entgelt ausgegeben. Hierauf wird auch in Fig. 5 noch eingegangen.

Bei einem Abfragecode 114, im Folgenden auch als Token 114 bezeichnet, handelt es sich um einen Datensatz, der durch eine eindeutige (und quasi nicht erratbare) Kennung gekennzeichnet ist, und der optional über weitere Datenfelder verfügt. Anschaulich und vereinfacht dargestellt entspricht ein Token 114 einem Passwort zur Verwendung zwischen Daten verarbeitenden Maschinen. Vergleichbar können Tokens 114 in der verteilten Datenverarbeitung beispielsweise als API-Key oder als Session-Token verwendet werden, um die unerwünschte Nutzung einer Ressource zu erschweren oder einzuschränken. Weiterhin kann ein Token 114 zur Authentifizierung genutzt werden. Hierbei ist ein Token 114 nicht nur eindeutig, sondern auch einem Steuergerät 118, einem Fahrzeug 100, 102 oder einer Infrastruktur 132 eindeutig zuordenbar.

Als ein Aspekt können in einem Ausführungsbeispiel "auf Guthabenbasis" aus einer ECU beziehungsweise einem Steuergerät Daten abgerufen werden. Dies erlaubt sowohl die reine Beschränkung der Anzahl von Datenabrufen (beispielsweise um die Buslast gering zu halten) als auch eine Abrechnung im Sinne eines Bezahlmodells. Zur Umsetzung wird ein sogenanntes "Token" 114 beziehungsweise ein Abfragecode 114 verwendet, wobei der Abfragecode 114 von der anfragenden Einheit (beispielsweise ECU, Smartphone, Internetrechner, Cloud-Dienst) zusammen mit der Anfrage 112 an die Quell-ECU überträgt. Die Identifikation und Autorisierung wird durch diesen Abfragecode 114 beziehungsweise dieses Token 114 gewährleistet.

Vorteilhaft ist eine Anzahl der Daten-Abrufe von Drittanbietern (absolut und/oder pro Zeiteinheit) beschränkbar. Dadurch wird eine Überlastung von Ressourcen vermieden. Zudem werden Dritte/Dienstanbieter durch das so verknappte "Angebot" zu einem sparsamen Umgang mit Anfragen animiert. So kann eine Buslast reduziert werden und eine Dienstgüte verbessert werden.

Von Vorteil ist, dass pro abgerufenen Datensatz ein Geldbetrag abgerechnet werden kann (beispielsweise 0,1 Eurocent). Weiterhin wird die implizite Steuerung der Ressourcenlast durch die Preisgestaltung ermöglicht (Dienstgüte-Verfahren).

Vorteilhaft kann eine gegenseitige Verrechnung beziehungsweise ein DatenAustausch zu festgelegten Quoten durch die vorgestellte Idee ebenfalls umgesetzt werden. Dies ist insbesondere dann sinnvoll, wenn Marktteilnehmer (beziehungsweise ECUs) gleichzeitig als Datenanbieter und Datenabrufer auftreten. Beispielsweise könnten beim Beantworten einer Abfrage eine bestimmte Anzahl von Abfrageberechtigungen 114 erzeugt werden. Somit werden vorteilhaft rein "parasitäre" Datenabfragen unterbunden.

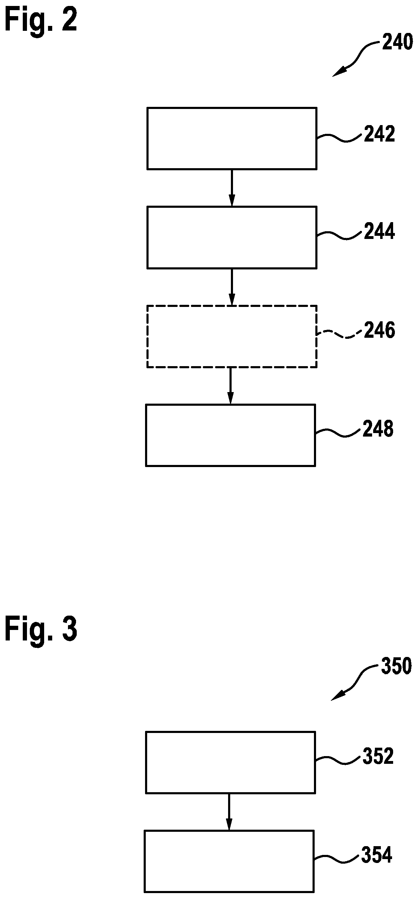

Fig. 2 zeigt ein Ablaufdiagramm eines Verfahrens 240 gemäß einem Ausführungsbeispiel der vorliegenden Erfindung. Das Verfahren 240 weist einen Schritt 242 des Einlesens, einen Schritt 244 des Überprüfens, einen optionalen Schritt 246 des Überwachens sowie einen Schritt 248 des Bereitstellens aus. Das Verfahren 240 kann in einem Ausführungsbeispiel auf der in Fig. 1 gezeigten Vorrichtung 104 zur Kontrolle von Datenabrufen von einem Steuergerät eines Fahrzeugs ausgeführt werden.

Im Schritt 242 des Einlesens wird eine Anfrage zum Bereitstellen von Daten sowie ein der Anfrage zuordenbarer Abfragecode eingelesen. Im auf den Schritt 242 des Einlesens folgenden Schritt 244 des Überprüfens wird eine Gültigkeit des Abfragecodes überprüft. Im letzten Schritt 248 des Bereitstellens wird eine die Anfrage beantwortende Antwortinformation bereitgestellt. Dabei umfasst die Antwortinformation zumindest einen physikalischen Parameter des Fahrzeugs und/oder des Fahrers und/oder einen Fahrtparameter des Fahrzeugs.

Optional weist das Verfahren 240 wie in Fig. 2 dargestellt einen Schritt 246 des Überwachens auf. Der Schritt 246 des Überwachens wird nach dem Schritt 244 des Überprüfens und vor dem Schritt 248 des Bereitstellens ausgeführt. Im Schritt 246 des Überwachens wird ein vorabdefiniertes Zeitintervall zwischen der Anfrage und einer zuvor ausgeführten Anfrage überwacht. So wird vorteilhaft sichergestellt, dass zwischen zwei Anfragen ein zeitlicher Mindestabstand liegt. In einer Variante wird eine Wartezeit hinzugefügt, wenn der zeitliche Abstand zu der zuvor ausgeführten Anfrage zu kurz ist. In einer anderen Variante wird das Verfahren beendet, dabei kann eine Fehlermeldung oder ein Fehlersignal ausgegeben werden.

In einem Ausführungsbeispiel wird im Schritt 244 des Überprüfens überprüft, ob eine hinterlegte Abfragecodeliste den Abfragecode umfasst. Dabei wird in dem Ausführungsbeispiel im Schritt 248 des Bereitstellens der Abfragecode aus der Abfragecodeliste entfernt. In einer Variante wird zusätzlich im Schritt 244 des Überprüfens der Abfragecode in der Abfragecodeliste gesperrt.

In einem nicht gezeigten Ausführungsbeispiel weist das Verfahren 240 einen optionalen Schritt des Ablehnens auf, der nach dem Schritt 244 des Überprüfens ausgeführt wird, wenn die Abfragecodeliste den Abfragecode nicht umfasst. In dem optionalen Schritt des Ablehnens wird ein negatives Bestätigungssignal bereitgestellt. Der Schritt des Ablehnens ist in dem in Fig. 5 gezeigten Blockdiagramm im Zusammenhang dargestellt.

Fig. 3 zeigt ein Ablaufdiagramm eines Verfahrens 350 gemäß einem Ausführungsbeispiel der vorliegenden Erfindung. Das Verfahren 350 zum Abrufen von Daten von einem Steuergerät eines Fahrzeugs weist zumindest einen Schritt 352 des Bereitstellens sowie einen Schritt 354 des Empfangens auf. Bei dem Fahrzeug kann es sich um ein Ausführungsbeispiel eines in Fig. 1 gezeigten Fahrzeugs 100, 102 handeln. Im Schritt 352 des Bereitstellens wird eine Anfrage zum Empfangen von Daten sowie ein der Anfrage zugeordneter Abfragecode bereitgestellt. Im Schritt 354 des Empfangens wird eine die Anfrage beantwortende Antwortinformation empfangen. Dabei umfasst die Antwortinformation zumindest einen physikalischen Parameter des Fahrzeugs, einen physikalischen Parameter des Fahrers oder einen Fahrtparameter des Fahrzeugs. In einem Ausführungsbeispiel umfasst die Antwortinformation eine Mehrzahl der genannten Parameter.

In einem optionalen Ausführungsbeispiel wird im Schritt 352 des Bereitstellens der Abfragecode aus einer Mehrzahl von in einer Abfragecodeliste hinterlegten Abfragecodes ausgewählt. Im Schritt 354 des Empfangens wird der Abfragecode aus der Abfragecodeliste entfernt.

In einem Ausführungsbeispiel interagieren das in Fig. 2 beschriebene Verfahren 240 zur Kontrolle von Datenabrufen von einem Steuergerät eines Fahrzeugs mit dem in Fig. 3 beschriebenen Verfahren 350 zum Abrufen von Daten von dem Steuergerät des Fahrzeugs miteinander. Eine derartige Interaktion ist in dem Ablaufdiagramm in Fig. 4 dargestellt.

Fig. 4 zeigt ein kombiniertes Ablaufdiagramm der Verfahren gemäß einem Ausführungsbeispiel der vorliegenden Erfindung. Als Startpunkt für das Ablaufdiagramm in Fig. 4 kann der mit dem Bezugszeichen 452 versehene Block betrachtet werden. Der Block 452 repräsentiert ein Bereitstellen einer Anfrage zum Empfangen von Daten von einem Steuergerät sowie eines der Anfrage zugeordneten Abfragecodes. Die Anfrage und der zugeordnete Abfragecode werden von dem abfragenden System an das angefragte System gesendet und dort eingelesen. So repräsentiert der Block 452 den Schritt 352 des Bereitstellens des in Fig. 3 gezeigten Verfahrens 350 sowie den Schritt 242 des Einlesens des in Fig. 2 gezeigten Verfahrens 240. In dem darauf folgenden Block 444 wird von dem abgefragten Steuergerät geprüft, ob der Abfragecode in einer Abfragecodeliste gültiger Abfragecodes enthalten ist. So repräsentiert der Block 444 den Schritt 244 des Überprüfens des in Fig 2 gezeigten Verfahrens 240. Im Falle eines positiven Ergebnisses des Überprüfens im Block 444 folgt im Ablauf der Block 446, im Falle eines negativen Ergebnisses des Überprüfens im Block 444 folgt im Ablauf der Block 460. Im Block 446 wird von dem abgefragten Steuergerät überprüft, ob eine minimale Dauer zwischen zwei Anfragen eingehalten wird beziehungsweise wurde. Im Falle eines positiven Ergebnisses des Überwachens im Block 446 folgt im Ablauf der Block 448, im Falle eines negativen Ergebnisses des Überwachens im Block 446 folgt im Ablauf der Block 460. So repräsentiert der Block 446 den Schritt 246 des Überwachens des in Fig. 2 gezeigten Verfahrens 240. Der Block 448 repräsentiert ein Entfernen des Abfragecodes aus der Abfragecodeliste gültiger Abfragecodes innerhalb des abgefragten Steuergeräts sowie ein Bereitstellen einer die Anfrage beantwortende Antwortinformation. So repräsentiert der Block 448 den Schritt 248 des Bereitstellens des in Fig. 2 gezeigten Verfahrens 240. Auf den Block 448 folgt der Block 454. Der Block 454 repräsentiert ein Empfangen der Antwortinformation durch das abfragende System sowie ein Entfernen des Abfragecodes aus der Abfragecodeliste gültiger Abfragecodes, die in dem abfragenden System hinterlegt ist. So repräsentiert der Block 454 den Schritt 354 des Empfangens des in Fig. 3 gezeigten Verfahrens 350.

Der Ablauf kann gegebenenfalls nach dem Block 454 mit dem Block 452 fortgesetzt werden, wenn das abfragende System eine erneute Anfrage an das angefragte System stellt.

Der Block 460 repräsentiert ein Senden einer negativen Bestätigung, auch bezeichnet als NAK, oder alternativ keine Antwort, wobei im Ablauf auf den Block 460 der Block 452 folgt. Der Block 460 repräsentiert einen optionalen Schritt des Ablehnens des in Fig. 2 gezeigten Verfahrens 240, wobei der optionale Schritt des Ablehnens in der Figur Fig. 2 nicht explizit dargestellt ist.

In einem Ausführungsbeispiel erfolgt, wie in dem Ablaufdiagramm in Fig. 4 dargestellt, ein Datenaustausch zwischen zwei Steuergeräten oder einem anfragenden System und dem Steuergerät. Der Datennutzer beziehungsweise das anfragende System sendet eine Anfrage mit einem gültigen Abfragecode beziehungsweise Token an das Steuergerät, von dem Daten abgefragt werden sollen. Auf dem anfragenden System wird der Abfragecode beziehungsweise das Token in der Liste verwendeter Tokens zwischengespeichert, da es für zukünftige Anfragen nicht mehr verwendet werden kann, aber noch nicht "verbraucht" (beantwortet) wurde. Darauf prüft das Steuergerät, ob der Abfragecode beziehungsweise das Token in der Liste der gültigen Abfragecodes beziehungsweise Tokens, das heißt der Abfragecodeliste, enthalten ist. Wenn der Abfragecode beziehungsweise das Token gültig ist, und falls die optionale Mindestdauer zwischen zwei Anfragen (zur Vermeidung von Überlastung) eingehalten wird, sendet das Steuergerät beziehungsweise die ECU die angefragten Daten. Gleichzeitig wird der Abfragecode beziehungsweise das Token aus der Liste der gültigen Abfragecodes beziehungsweise Tokens entfernt. Falls der Abfragecode beziehungsweise das Token nicht gültig ist, sendet das Steuergerät beziehungsweise die ECU entweder eine negative Bestätigung oder alternativ (beispielsweise um den Ressourcenverbrauch gering zu halten) gar keine Antwort. Das anfragende System empfängt die Daten. Der Abfragecode beziehungsweise das Token ist somit "verbraucht" (wertlos) und wird auf dem anfragenden System sowohl aus der Liste gültiger Abfragecodes beziehungsweise Tokens als auch aus der Liste der verwendeten Abfragecodes beziehungsweise Tokens gelöscht.

Fig. 5 zeigt ein Ablaufdiagramm eines Verfahrens gemäß einem Ausführungsbeispiel der vorliegenden Erfindung. Die in den vorangegangenen Figuren beschriebenen Verfahren nutzen Abfragecodes. Fig. 5 zeigt auf, wie diese Abfragecodes erstellt werden können und den beiden Verfahren beziehungsweise entsprechenden Steuergeräten oder Systemen zugeführt werden können. Das Ablaufdiagramm in Fig. 5 weist vier Blöcke 562, 564, 566, 568 auf, die sequenziell durchlaufen werden. Nach Ausführen des Blocks 568 kann der Ablauf mit dem Block 562 erneut starten. Der Block 562 repräsentiert einen Erwerb einer Anzahl von Berechtigungen zur Datenabfrage. Der Block 564 repräsentiert ein Erzeugen von Abfragecodes, die im folgenden auch Token genannt werden, unter Verwendung der im Block 562 erworbenen Anzahl von Berechtigungen zur Datenabfrage. Der Block 566 repräsentiert eine Übertragung der Abfragecodes zu einem abfragenden System oder zu einem Steuergerät. Eine derartige Übertragung kann über ein Netzwerk oder über einen Datenträger erfolgen. Als Netzwerk kann beispielsweise das Internet genutzt werden, als Datenträger kann beispielsweise ein USB-Stick, eine Speicherkarte oder dergleichen genutzt werden. Der Block 568 repräsentiert einen Verbrauch der Abfragecodes durch entsprechende Datenabfragen. So repräsentiert der Block 568 das in Fig. 4 dargestellte Ablaufdiagramm.

Mit anderen Worten besteht der Block 562 für einen Erwerb oder Gewährung einer Anzahl von Anfrageberechtigungen - dabei erwirbt der Datennutzer eine Anzahl von Abfrageberechtigungen beim Dateneigentümer beziehungsweise Datenhändler (beispielsweise ECU Hersteller oder OEM). Eine optionale Bezahlung beziehungsweise Vergütung erfolgt mit einer anerkannten Methode nach Stand der Technik. Im Block 564 erzeugt der Dateneigentümer eine Anzahl von one-time-Tokens (für jeweils genau eine Abfrage) beziehungsweise alternativ eine Anzahl von Blocktokens (für je eine definierte Anzahl >1 von Abfragen). Im Block 566 werden die Tokens verschlüsselt und signiert (mit Verfahren nach Stand der Technik, beispielsweise unter Verwendung eines HSM) an den Datennutzer (beziehungsweise das anfragende System) und das abzufragende Steuergerät übertragen (beispielsweise online, oder alternativ beispielsweise im Fahrzeug per Bluetooth/WLAN/USB-Stick an der Head-Unit.). Der Block 568 steht wie bereits beschrieben für das in Fig. 4 dargestellte Ablaufdiagramm. Dabei wird bei jeder Anfrage ein one-time-Token an das Steuergerät übertragen. Das Steuergerät überprüft, ob dieses Token in der Liste gültiger Tokens enthalten ist. Ist das Token gültig, so wird ein Datensatz geliefert und das Token aus der Liste der gültigen Tokens gelöscht.

In einem alternativen Ausführungsbeispiel wird im Block 568 bei jeder Anfrage das Blocktoken an das Steuergerät übertragen. Das Steuergerät überprüft, ob zu diesem Token noch Datensätze abgerufen werden dürfen. Falls ja, wird ein Datensatz ausgeliefert und die Anzahl der abrufbaren Datensätze dekrementiert. Falls die Anzahl der abrufbaren Datensätze null entspricht, wird das Token aus der Liste der gültigen Tokens gelöscht. Von Vorteil ist, dass pro Token eine definierte Vielzahl von Anfragen erlaubt ist, wodurch für die Token-Liste weniger Speicherbedarf benötigt wird. Dabei ist für das zuletzt genannte Ausführungsbeispiel eine anwendungsabhängige Abwägung von Sicherheitsbedarf und Ressourcenverbrauch ist erforderlich.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (240) zur Kontrolle zumindest eines Datenabrufs von einem Steuergerät (108) eines Fahrzeugs (100), wobei das Verfahren (240) die folgenden Schritte aufweist:
Einlesen (242) einer Anfrage (112) zum Bereitstellen von Daten sowie eines der Anfrage (112) zugeordneten Abfragecodes (114);
Überprüfen (244) einer Gültigkeit des Abfragecodes (114); und
Bereitstellen (248) einer die Anfrage (112) beantwortenden Antwortinformation (116), wobei die Antwortinformation (116) zumindest einen physikalischen Parameter des Fahrzeugs (100) und/oder des Fahrers und/oder einen Fahrtparameter des Fahrzeugs (100) umfasst,
**dadurch gekennzeichnet, dass**
zwischen dem Schritt (244) des Überprüfens und dem Schritt (248) des Bereitstellens ein Schritt (246) des Überwachens ausgeführt wird, wobei im Schritt (246) des Überwachens ein vorabdefiniertes Zeitintervall zwischen der Anfrage (112) und einer zuvor ausgeführten Anfrage überwacht und/oder zugewartet wird.

2. Verfahren (240) gemäß Anspruch 1, bei dem im Schritt (244) des Überprüfens überprüft wird, ob eine hinterlegte Abfragecodeliste den Abfragecode (114) umfasst, insbesondere wobei im Schritt (248) des Bereitstellens der Abfragecode (114) aus der Abfragecodeliste entfernt wird.

3. Verfahren (240) gemäß Anspruch 2, bei dem im Schritt (244) des Überprüfens der Abfragecode (114) in der Abfragecodeliste gesperrt wird.

4. Verfahren (240) gemäß einem der vorangegangenen Ansprüche 2 oder 3, bei dem nach dem Schritt (244) des Überprüfens ein Schritt des Ablehnens ausgeführt wird, wenn die Abfragecodeliste den Abfragecode (114) nicht umfasst oder der Abfragecode (114) in der Abfragecodeliste als gesperrt vermerkt ist, wobei im Schritt des Ablehnens ein negatives Bestätigungssignal bereitgestellt wird.

5. Verfahren (350) gemäß einem der vorangegangenen Ansprüche, wobei das Verfahren (350) die folgenden Schritte aufweist:
Bereitstellen (352) der Anfrage (112) zum Empfangen von Daten sowie des der Anfrage (112) zugeordneten Abfragecodes (114); und
Empfangen (354) oder Einlesen der die Anfrage (112) beantwortenden Antwortinformation (116) nach dem Schritt des Bereitstellens (248) der die Anfrage (112) beantwortenden Antwortinformation (116).

6. Verfahren (350) gemäß Anspruch 5, bei dem im Schritt (352) des Bereitstellens der Abfragecode (114) aus einer Mehrzahl von in einer Abfragecodeliste hinterlegten Abfragecodes (114) ausgewählt wird und/oder bei dem im Schritt (354) des Empfangens der Abfragecode (114) aus der Abfragecodeliste entfernt wird.

7. Vorrichtung (104, 106), die ausgebildet ist, um alle Schritte zumindest eines der Verfahren (240; 350) gemäß einem der vorangegangenen Ansprüche durchzuführen.

8. Computerprogramm, das dazu eingerichtet ist, alle Schritte eines Verfahrens (240; 350) gemäß einem der vorangegangenen Ansprüche 1-6 durchzuführen.

9. Maschinenlesbares Speichermedium mit einem darauf gespeicherten Computerprogramm nach Anspruch 8.

## Claims

1. Method (240) for controlling at least one data retrieval by a controller (108) of a vehicle (100), wherein the method (240) has the following steps:
reading in (242) a request (112) for providing data and an interrogation code (114) associated with the request (112);
checking (244) a validity of the interrogation code (114); and
providing (248) response information (116) responding to the request (112), wherein response information (116) comprises at least one physical parameter of the vehicle (100) and/or of the driver and/or a journey parameter of the vehicle (100),
**characterized in that**
the checking step (244) and the providing step (248) having a monitoring step (246) carried out between them, wherein a predefined time interval between the request (112) and a request carried out previously is monitored and/or waited in the monitoring step (246) .

2. Method (240) according to Claim 1, in which the checking step (244) involves checking whether a stored interrogation code list comprises the interrogation code (114), in particular wherein the providing step (248) involves the interrogation code (114) being removed from the interrogation code list.

3. Method (240) according to Claim 2, in which the checking step (244) involves the interrogation code (114) being blocked in the interrogation code list.

4. Method (240) according to either of preceding Claims 2 and 3, in which the checking step (244) is followed by a rejecting step being carried out if the interrogation code list does not comprise the interrogation code (114) or the interrogation code (114) is recorded as blocked in the interrogation code list, wherein the rejecting step involves a negative acknowledgement signal being provided.

5. Method (350) according to one of the preceding claims, wherein the method (350) has the following steps:
providing (352) the request (112) for receiving data and the interrogation code (114) associated with the request (112); and
receiving (354) or reading in the response information (116) responding to the request (112) after the step of providing (248) the response information (116) responding to the request (112).

6. Method (350) according to Claim 5, in which the providing step (352) involves the interrogation code (114) being selected from a plurality of interrogation codes (114) stored in an interrogation code list and/or in which the receiving step (354) involves the interrogation code (114) being removed from the interrogation code list.

7. Apparatus (104, 106) designed to perform all the steps of at least one of the methods (240; 350) according to one of the preceding claims.

8. Computer program configured to perform all the steps of a method (240; 350) according to one of preceding claims 1-6.

9. Machine-readable storage medium having a computer program according to Claim 8 stored thereon.

## Revendications

1. Procédé (240) permettant de contrôler au moins un appel de données par un appareil de commande (108) d'un véhicule (100), le procédé (240) comprenant les étapes suivantes :
la lecture (242) d'une demande (112) de fourniture de données ainsi que d'un code de demande (114) associé à la demande (112) ;
la vérification (244) d'une validité du code de demande (114) ; et
la fourniture (248) d'une information de réponse (116) répondant à la demande (112), dans lequel l'information de réponse (116) comprend au moins un paramètre physique du véhicule (100) et/ou du conducteur et/ou un paramètre de marche du véhicule (100),
**caractérisé en ce qu'**une étape (246) de surveillance est effectuée entre l'étape (244) de vérification et l'étape (248) de fourniture, dans lequel, lors de l'étape (246) de surveillance, un intervalle de temps prédéfini est surveillé et/ou attendu entre la demande (112) et une demande précédemment effectuée.

2. Procédé (240) selon la revendication 1, dans lequel il est vérifié lors de l'étape (244) de vérification si une liste de codes de demande enregistrée comprend le code de demande (114), en particulier dans lequel le code de demande (114) est supprimé de la liste de codes de demande lors de l'étape (248) de fourniture.

3. Procédé (240) selon la revendication 2, dans lequel, lors de l'étape (244) de vérification, le code de demande (114) est bloqué dans la liste de codes de demande.

4. Procédé (240) selon l'une des revendications 2 ou 3 précédentes, dans lequel, après l'étape (244) de vérification, une étape de refus est effectuée lorsque la liste de codes de demande ne comprend pas le code de demande (114) ou lorsque le code de demande (114) est considéré comme étant bloqué dans la liste de codes de demande, dans lequel un signal d'acquittement négatif est fourni lors de l'étape de refus.

5. Procédé (350) selon l'une des revendications précédentes, dans lequel le procédé (350) comprend les étapes suivantes :
la fourniture (352) de la demande (112) de réception de données ainsi que du code de demande (114) associé à la demande (112) ; et
la réception (354) ou la lecture de l'informations de réponse (116) répondant à la demande (112) après l'étape de fourniture (248) de l'information de réponse (116) répondant à la demande (112).

6. Procédé (350) selon la revendication 5, dans lequel, lors de l'étape (352) de fourniture du code de demande (114), une sélection parmi une pluralité de codes de demande (114) enregistrés dans une liste de codes de demande est effectuée et/ou lors de l'étape (354) de réception, le code de demande (114) est supprimé de la liste de codes de demande.

7. Dispositif (104, 106) conçu pour mettre en oeuvre toutes les étapes d'au moins l'un des procédés (240 ; 350) selon l'une des revendications précédentes.

8. Programme d'ordinateur conçu pour mettre en oeuvre toutes les étapes d'un procédé (240 ; 350) selon l'une des revendications 1-6 précédentes.

9. Support de stockage lisible par machine sur lequel est stocké un programme d'ordinateur selon la revendication 8.
